# EUROPEAN PATENT APPLICATION

(11) **EP 2 161 634 A1**
(43) Date of publication of application: **10.03.2010**
(21) Application number: 08275048.0
(22) Date of filing: 03.09.2008
(51) Int. Cl.: G05B 13/00

(54) **Estimating a state of at least one target**

(71) Applicant: BAE Systems PLC, 6 Carlton Gardens London SW1Y 5AD (GB)
(72) Inventor: The designation of the inventor has not yet been filed
(74) Representative: BAE SYSTEMS plc Group IP Department

(57) **Abstract**

A method of estimating a state of at least one target (104). The method includes obtaining at least one target measurement from a first sensor (302), and applying a Gaussian Process (GP) technique to a said target measurement to obtain an updated target measurement.

## Description

The present invention relates to estimating a state of at least one target.

Sensors are widely used for monitoring and surveillance applications and often track moving targets for various purposes, e.g. military or safety applications. A known sensing technique that involves multiple sensors is a distributed sensor fusion network. The sensors in the network operate a Decentralised Data Fusion (DDF) algorithm (DDF is described in J. Manyika and H.F. Durrant-Whyte, Data Fusion and Sensor Management: A Decentralised Information-Theoretic Approach, Ellis Horwood, 1994), where data based on measurements taken by each sensor in the network are transmitted to the other sensors. Each sensor then performs a fusing operation on the data it has received from the other sensors as well as data based on its own measurements in order to predict the states (typically locations and velocities) of the targets.

A problem associated with distributed sensor fusion networks is inadequate sensor registration. In multiple sensor surveillance systems/networks each sensor makes measurements of target positions in the survey volume and the measurements are integrated over time and combined using statistical data fusion algorithms to generate target tracks (a track typically comprises a position and velocity estimate and its calculated error). Sensor measurement errors are composed of two components: a random component ("noise") and a systematic component ("bias"). Sensor measurement errors can be constant or time-varying ("drift"). When multiple sensors are fused, uncorrected biases in their measurements can cause serious degradation of track estimates, which is known as the sensor registration problem. Sensor registration can be considered to be the process of estimating and removing a sensor's systematic errors, or "registration errors".

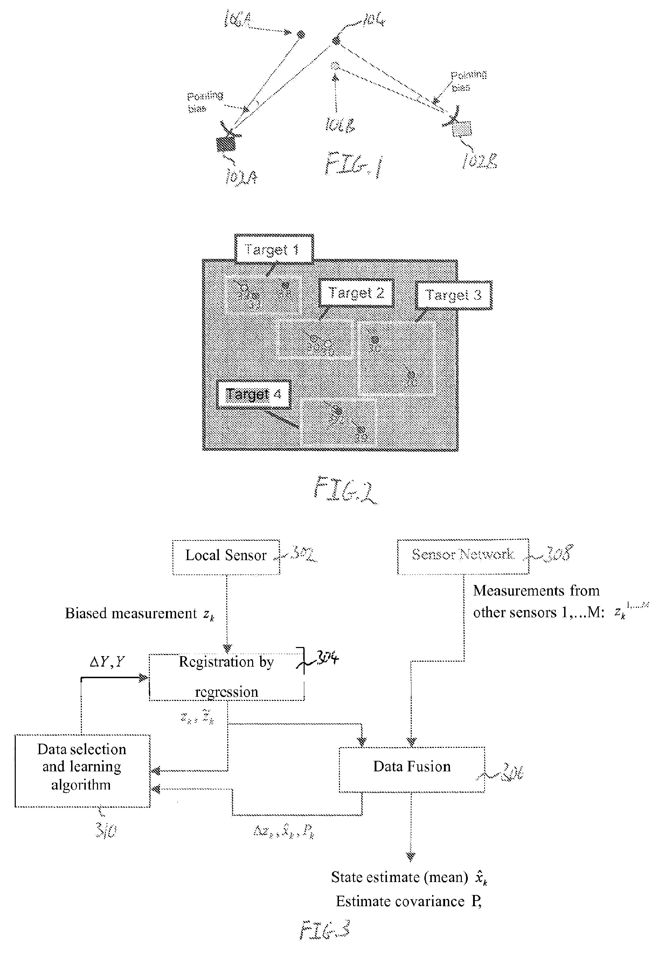

An example of registration errors resulting from sensor pointing biases is illustrated in Figure 1. Two sensors 102A, 102B each track a target 104. Due to the pointing biases (e.g. the processors of the sensors have an inaccurate record of the sensors bearing measurement origins). The first sensor 102A outputs a measurement of the target being at location 106A, whilst the second sensor 102B outputs a measurement of the target at location 106B. Other examples of registration errors include clock errors, tilt errors, and location errors (see M.P. Dana, "Registration: A pre-requisite for multiple sensor tracking". In Y. Bar-Shalom (Ed.), Multitarget-Multisensor Tracking: Advanced Applications. Artech House, 1990, Ch. 5, for example).

The effect of another example of registration errors is illustrated schematically in Figure 2, where four targets tracked from three different sensors produce a total of 10 different tracks. This proliferation of sensor tracks is a consequence of uncorrected registration errors adversely influencing the output of a multi-sensor multi-target tracking and data fusion system.

Common solutions to the sensor registration problem assume that registration errors can be described by a simple model (e.g. fixed offsets) and the parameters of that model are estimated as part of the data fusion process. In practice, registration errors exhibit spatial variations (due to environmental or other conditions) and it is unreasonable to assume all sources of registration error are known. New sources of errors may also arise as sensor technology develops. Furthermore, registration errors can change over time, due to sensor wearing, changes in environmental conditions, etc. It is usually very difficult to accurately model such errors as they are caused by natural phenomenon and can vary very slowly.

Embodiments of the present invention are intended to address at least some of the problems outlined above.

According to one aspect of the present invention there is provided a method of estimating a state of at least one target, the method including:
obtaining at least one target measurement from a first sensor, and applying a Gaussian Process (GP) technique to a said target measurement to obtain an updated target measurement.

The method may include calculating a predicted bias for the measurement from a regression model represented by the GP and using the predicted bias to produce the updated target measurement.

The first sensor may be part of a Distributed Data Fusion (DDF) network including at least one further sensor. The method may further include fusing the updated target measurement with at least one further target measurement obtained from the least one further sensor in the distributed sensor fusion network to generate a fused measurement or measurements relating to the at least one target. The step of applying the Gaussian Process technique can include performing a learning process based on the at least one target measurement and the fused measurement or measurements to generate a training set for use with the regression model. The learning process may involve calculating a covariance matrix and a Cholesky factor of the covariance matrix, where the Cholesky factor is used with the regression model for computational efficiency.

The training set may initially include a measurement value known or assumed to represent an error-free measurement taken by the first sensor. The GP regression model may be a non-linear, non-parametric regression model.

According to another aspect of the present invention there is provided a sensor configured to estimate a state of at least one target, the sensor including:
a device configured to obtain at least one target measurement, and
a processor configured to apply a Gaussian Process (GP) technique to a said target measurement to obtain an updated measurement.

The processor may be integral with the sensor, or may be remote from it.

According to another aspect of the present invention there is provided a computer program product comprising computer readable medium, having thereon computer program code means, when the program code is loaded, to make the computer execute a method of estimating a state of at least one target substantially as described herein.

According to yet another aspect of the present invention there is provided a method of estimating a state of at least one target tracked by a plurality of sensors within a distributed sensor fusion network, wherein at least one of the sensors within the network has been registered using a technique involving a Gaussian Process.

Whilst the invention has been described above, it extends to any inventive combination of features set out above or in the following description. Although illustrative embodiments of the invention are described in detail herein with reference to the accompanying drawings, it is to be understood that the invention is not limited to these precise embodiments. As such, many modifications and variations will be apparent to practitioners skilled in the art. Furthermore, it is contemplated that a particular feature described either individually or as part of an embodiment can be combined with other individually described features, or parts of other embodiments, even if the other features and embodiments make no mention of the particular feature. Thus, the invention extends to such specific combinations not already described.

The invention may be performed in various ways, and, by way of example only, embodiments thereof will now be described, reference being made to the accompanying drawings in which:
Figure 1 is a schematic diagram of sensors tracking a target;
Figure 2 illustrates schematically errors arising from pointing bias of sensors;
Figure 3 illustrates schematically a data flow in an embodiment of the system including a sensor;
Figure 4 illustrates schematically steps involved in a data selection and learning process relating to measurements taken by the sensor;
Figure 5 illustrates schematically steps involved in a regression process for the sensor measurements;
Figure 6A is a graphical representation of an example comparison between measured and true states of a target prior to registration of a sensor, and
Figure 6B is a graphical representation of an example comparison between measured and true states of a target following registration of the sensor.

Referring to Figure 3, a local sensor 302 obtains a measurement Zₖ, where k is an index which refers to a discrete set of measurement times. The measurement will typically represent the location and velocity of the target, but other features, e.g. bearing, could be used. The measurement is passed to a registration process 304 (described below) that produces a corrected measurement value that compensates for any bias that is calculated to be present in the sensor, i.e. the corrected measurement value (*z̃ₖ*) is a revised record of the position of the sensor within the sensor network. In the present example, the correction is applied "virtually" in software, but it is also possible to apply the correction in hardware, i.e. physically reconfigure the sensor. It will be understood that the registration process may be executed by a processor integral with the sensor 302, or by a remote processor that receives data relating to the measurement taken by the sensor.

In the present embodiment the sensor is part of a DDF network of sensors and the updated measurement, which is intended to correct the bias in the original measurement taken by the sensor, is used in a fusion process along with measurements taken from the other sensors (all or some of which may also be executing a registration process 304), although it will be understood that calculating the updated/improved measurement can be of value for improving the accuracy of a measurement taken from a single sensor.

The original measurement zₖ and the corrected measurement *z̃ₖ* are passed to a data fusion process 306. The process 306 may comprise a conventional data fusion algorithm such as the Kalman filter or extended Kalman filter. At least one further measurement (*zₖⁿ* in the example) from at least one other sensor n in the network 308 is also passed to the data fusion process 306. The process 306 produces a state estimate of mean *x̂ₖ* and error covariance *Pₖ* that will normally have improved accuracy because errors resulting from incorrect sensor registration have been eliminated or mitigated. The Δ*zₖ* value (that represents a calculated bias for the measurement zₖ taken by the sensor) resulting from the data fusion process 306 is passed to a training data selection and learning process 310.

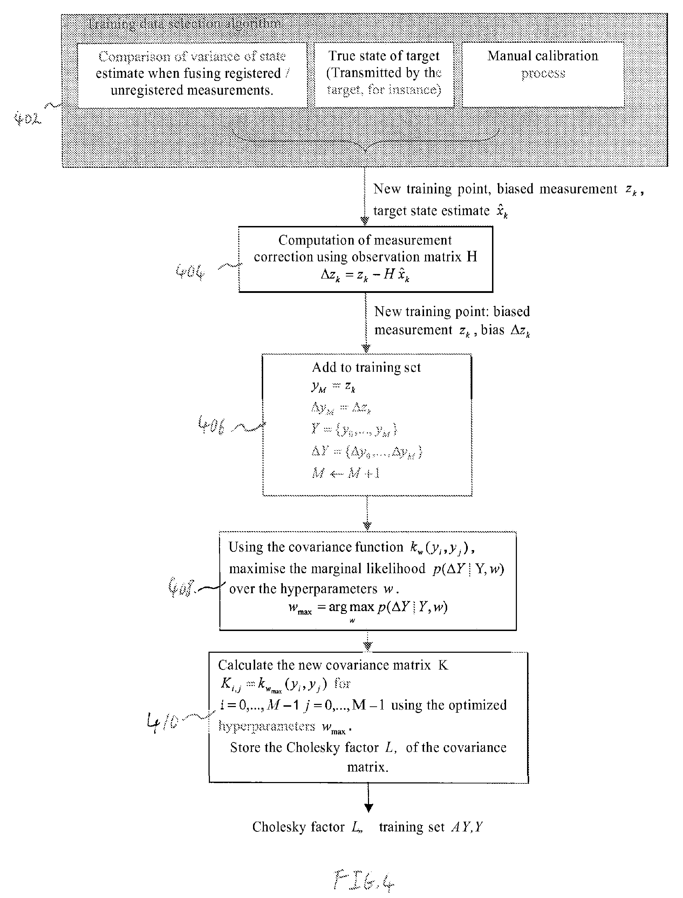

Figure 4 illustrates schematically steps involved in a learning procedure of the data selection and learning process 310 shown in Figure 3. In the embodiment described herein a Gaussian Process framework is used as a non-linear, non-parametric regression model. A training set of registration errors is used, which is built from the differences between unregistered and registered measurements, or their estimates. In the multiple sensor tracking system, estimates of registration errors can be derived from the state estimates of the target observed by the subset of registered sensors. If the target can provide its own (true) state, even sporadically, it can be used to derive the registration error of a sensor and added to the training set. The main advantages of Gaussian Processes over other non-parametric estimation techniques (e.g. Neural Networks) are:
- More rigorous foundations and Bayesian approach
- Artificial Neural Networks cannot inherently give an indication of the error of their prediction and a constant error model is often used. In a sensor fusion setting (e.g. Kalman filter), this represents a loss of valuable information. It can even introduce large errors when the value is predicted far from any training data.
- Gaussian Processes provide the uncertainty of the predicted value (as the covariance of a Gaussian variable). For example, if no training data exists in the neighbourhood of the point of prediction, the error of the predicted value will be very large.
- Less sensitive to over fitting and over smoothing (Occam's razor). By comparing and optimizing over the marginal likelihood of the data, a complex model will not degrade the quality of the regression. The GP inference will adapt the complex model to the observed data and the desired uncertainty level.
- Adding new training data to the Gaussian process is relatively easy and efficient implementations of the procedure exist (see Osborne, M. A. and Roberts, S.J. (2007) Gaussian Processes for Prediction. Technical Report PARG-07-01, University of Oxford for an implementation)

At step 402, the state estimate of the target *x̂ₖ* and its error covariance *Pₖ* (which is an indication of the likely error of the state estimate) are received from the data fusion process 306, as well as the biased measurement *zₖ* from the local sensor 302. A training data selection algorithm at step 402 decides whether the new biased measurement should be added to the training set. An example of a suitable decision algorithm, based on the comparison of the estimate covariance with and without the new training point, is described in the abovementioned Osborne and Roberts article under the name "Active Data Selection". Another possible selection algorithm is to use the true state of the target, when it is provided intermittently by the target.

At step 404, an estimate of the unbiased measurement is calculated by using the observation matrix used by the data fusion process 306. The bias Δ*zₖ* is then calculated by taking the difference between the actual measurement *zₖ* and the estimation of the unbiased measurement.

The calculated bias Δ*zₖ* and the original measurement *zₖ* are added to the training set at step 406. The training set is formed of a set of the original measurements *Y* and a set of the biases Δ*Y* (where M in the equations shown at 406 in the Figure represents the number of data points, i.e. the number of biased measurement and bias estimate data pairs, in the training set).

This regression model uses a Gaussian Process of covariance function k(x,y) with hyperparameters w to fit the training data. Typically, the covariance function is a squared exponential function, whose hyperparameters are the characteristic length-scales, one for each dimension of the measurement vector (see Gaussian Processes for Machine Learning Carl Edward Rasmussen and Christopher K. I. Williams The MIT Press, 2006. ISBN 0-262-18253-X, Chapter 4 for further details). The hyperparameters of the covariance function are recalculated at 408 to fit the Gaussian Process model of the new training set. The fitting process maximizes the marginal likelihood of the data set based on the Gaussian Process of covariance k(x,y). The Gaussian assumptions allow the use of efficient optimization methods (as described in Section 5.4.1 of the abovementioned Rasmussen and Williams reference).

The covariance matrix is then calculated at step 410 by simply applying the covariance function at the training points, with the optimized hyperparameters. Since the regression process 304 uses the inverse of the covariance matrix it is more computationally efficient to calculate the Cholesky decomposition of the covariance matrix once for all and then reuse the Choleksy factor *L_{YY}* (lower factor in this example) to perform the regression.

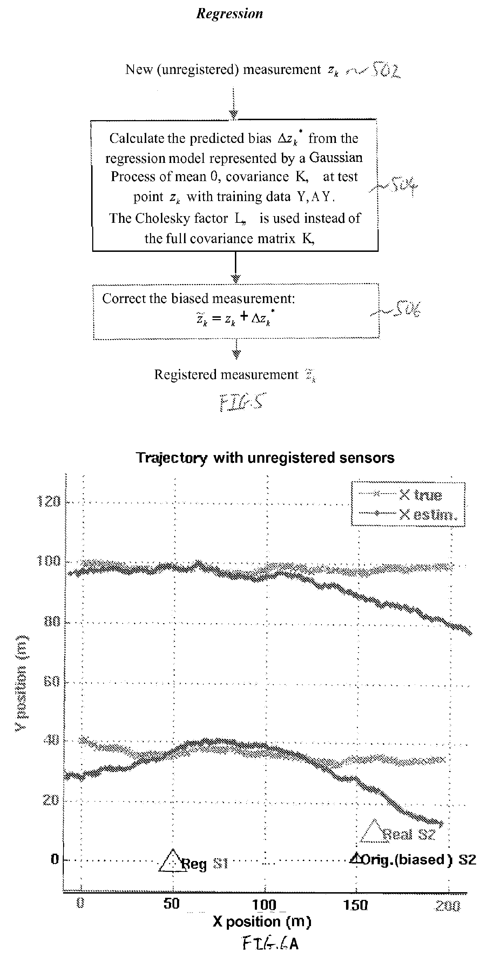

Turning to Figure 5, a regression procedure that uses values calculated during the learning procedure of Figure 4 is outlined. The learning procedure is normally executed only if the data selection algorithm 402 is performed. The regression procedure of Figure 5 is always executed following the reception of a new measurement from the sensor, resulting in an "online" registration procedure.

At step 502 the biased measurement zₖ from the local sensor 302 is received. At step 504 the predicted bias Δ*zₖ*^{*} for the sensor measurement *zₖ* is calculated from a regression model represented by a Gaussian Process:

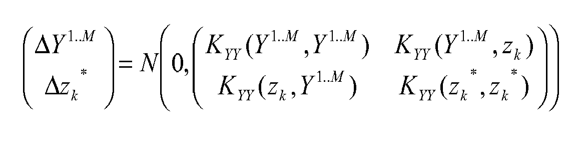

The Gaussian Process is modelled by the covariance matrix *K_{YY}* but the regression actually uses its Cholesky factor *L_{YY}* calculated at 410 for computational efficiency. (The equations of the regression model, including the use of the Cholesky factor, are discussed in Section 2.2 of the abovementioned Rasmussen and Williams reference).

At step 506 the biased measurement *zₖ* is corrected by adding the bias Δ*zₖ*^{*} calculated at step 504. This corrected value z̃*ₖ* is then output by the registration process 304.

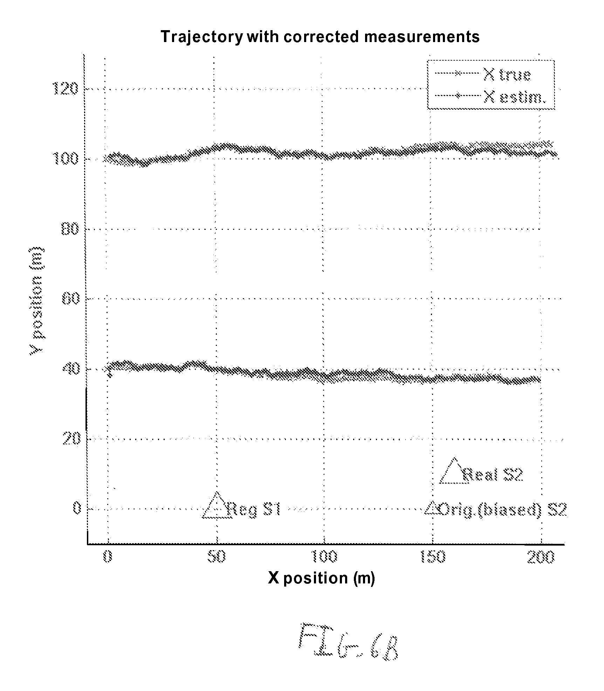

Figures 6A and 6B illustrate the results of a simulation of two sensors configured to execute the method described above tracking one target. Each sensor provides the range and bearing of the target from its position. The target motion follows a random walk model and the tracker is based on an Unscented Kalman Filter. One of the sensors is not correctly registered and its position is reported to be 10 m west and 10 m south of its real position. The target is tracked for 200 m and the experiment is repeated 2 times with different initial positions. The training set for the registration algorithm is composed of 20 randomly distributed training points. In a real world application, those training points can be derived from the state information sent by the target at regular intervals. The accuracy of the tracking is compared using the Root Mean Squared Error of the position estimate and the true position of the target.

Figure 6A is a graph showing example 2D coordinates of each target trajectory as measured by the sensor without running the registration process. Figure 6B is a similar graph showing the 2D trajectory with both sensors running the registration process described above (with 20 training points). The results are summarised in the following table:

| ***Situation*** | ***Tracking error (RMSE)*** |
|---|---|
| With registered sensors | 0.4 m |
| With unregistered sensors | 8.3 m |
| After correction with GP | 0.8 m |

## Claims

1. A method of estimating a state of at least one target (104), the method including:
obtaining at least one target measurement (*zₖ*) from a first sensor (302), and
applying (304, 310) a Gaussian Process (GP) technique to a said target measurement to obtain an updated target measurement (*z̃ₖ* ).

2. A method according to claim 1, including calculating (504) a predicted bias (Δz*ₖ*^{*}) for the measurement (*zₖ*) from a regression model represented by the GP and using (506) the predicted bias to produce the updated target measurement (*z̃ₖ*).

3. A method according to claim 2, wherein the first sensor (302) is part of a Distributed Data Fusion (DDF) network (308) including at least one further sensor.

4. A method according to claim 3, further including fusing (306) the updated target measurement with at least one further target measurement (*zₖⁿ*) obtained from the least one further sensor in the distributed sensor fusion network (308) to generate a fused measurement or measurements (*x̂ₖ*, *Pₖ*) relating to the at least one target.

5. A method according to claim 4, wherein the applying of the Gaussian Process (GP) technique includes performing a learning process (402 - 410) based on the at least one target measurement (*zₖ*) and the fused measurement or measurements (*x̂ₖ, Pₖ*) to generate a training set for use with the regression model.

6. A method according to claim 5, wherein the learning process involves calculating (410) a covariance matrix (*K_{YY}*) and a Cholesky factor (*L_{YY}*) of the covariance matrix, where the Choleksy factor is used with the regression model for computational efficiency.

7. A method according to claim 5 or 6, wherein the training set initially includes a measurement value known or assumed to represent an error-free measurement taken by the first sensor (302).

8. A method according to any one of claims 2 to 7, wherein the GP regression model is a non-linear, non-parametric regression model.

9. A sensor configured to estimate a state of at least one target, the sensor including:
a device configured to obtain at least one target measurement, and
a processor configured to apply a Gaussian Process (GP) technique to a said target measurement to obtain an updated measurement.

10. A computer program product comprising computer readable medium, having thereon computer program code means, when the program code is loaded, to make the computer execute a method of estimating a state of at least one target including:
obtaining at least one target measurement from a first sensor (302), and
applying a Gaussian Process (GP) technique to a said target measurement to obtain an updated target measurement.
